# EUROPEAN PATENT SPECIFICATION

(11) **EP 1 855 497 B1**
(45) Date of publication and mention of the grant of the patent: **04.08.2010**
(21) Application number: 06840620.6
(22) Date of filing: 25.12.2006
(51) Int. Cl.: H04W 4/12

(54) **A METHOD AND SYSTEM FOR MESSAGE ROUTING OF MULTIMEDIA MESSAGING SERVICE**
VERFAHREN UND SYSTEM ZUR NACHRICHTENLENKUNG EINES MULTIMEDIA-NACHRICHTENDIENSTES
PROCÉDÉ ET SYSTÈME D'ACHEMINEMENT DE MESSAGES D'UN SERVICE DE MESSAGERIE MULTIMÉDIA

(30) Priority: 27.02.2006 CN 200610057770
(43) Date of publication of application: 14.11.2007
(73) Proprietor: Huawei Technologies Co., Ltd., Longgang District, Shenzhen Guangdong 518129 (CN)
(72) Inventor: BAI, Guangchang, Guangdong 518129 (CN); CHENG, Weiming Intellectual Property Department, Shenzhen, Guangdong Province 518129 (CN)
(74) Representative: Epping - Hermann - Fischer
(86) International application number: PCT/CN2006/003568
(87) International publication number: WO 2007/095816

(56) References cited:
- EP-A- 1 453 328
- EP-A- 1 555 836
- EP-A- 1 622 412
- EP-A2- 1 662 412
- WO-A-2004/052033
- CN-A- 1 552 150
- CN-A- 1 579 108
- CN-A- 1 717 072

## Description

### Field of the Invention

The present invention relates to the technical field of communication, in particular, to a method and system for message routing in Multimedia Message Service.

### Background of the Invention

At present, the Multimedia Message Service (MMS) has been recognized as the key motive force in initiation and development of the General Packet Radio Service (GPRS) and 3G markets, which will promote the development of mobile communication services effectively. The MMS is a further development of the Short Message Service (SMS) and the Enhanced Message Service (EMS), which provides a complete end-to-end solution for personal multimedia mobile communication services. In view of the communication contents, the multimedia message includes image, audio, video, data, etc, and in view of the functions, the Multimedia Message Service covers the multimedia message communications of terminal-to-terminal, terminal-to-application (mainly, Value Added Service Provider) and application-to-terminal. This not only implements the information transfer between terminals and between a terminal and an application, but also achieves a diversity of contents which include various combinations of the picture, voice, image, data and text. The MMS as an open media access platform is able to derive more colorful content service applications under interaction between mobile users and Internet Content Providers. The user on the one hand is an MMS consumer and on the other hand is a content developer, which will certainly arouse the user's interest in using the service.

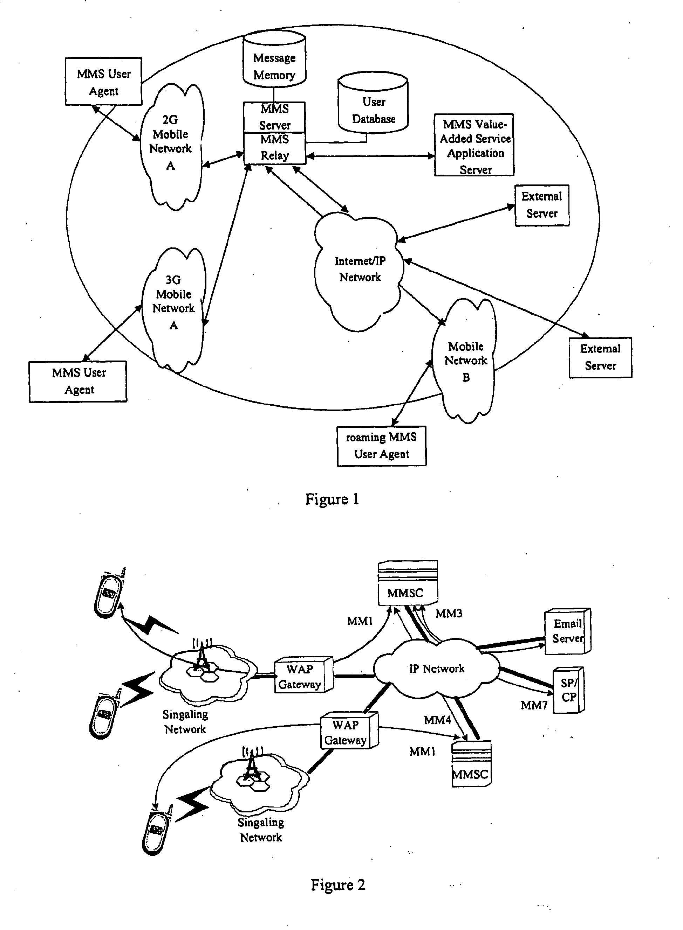

The architecture of a multimedia message system is shown in Figure 1.

The multimedia message system may communicate with many different network types. Various network elements related to the Multimedia Message Service include the mobile network (2G, 3G), Internet, Multimedia Message Service (MMS) user agent, Value Added Service Provider, external server (e.g. mail and fax), and so on. The MMS relay/server, i.e. so called Multimedia Message Service Center (MMSC), mainly has such functions for sending and receiving a multimedia message, supporting interaction with an external server, notifying the MMS user agent a multimedia message, generating a delivery report, translating an address, storing a message, forwarding and routing a message, generating a bill, negotiating the terminal capability, etc. Both the interaction, between the MMSC and the user agent, and the interaction, between the MMSC and the Value Added Service Provider, are basic services.

When a carrier actually develops services, a plurality of MMSCs are usually employed to provide the MMSs to users. Each MMSC manages a part of the users, and provides a corresponding access function for the users.

A system structure for interconnection of a plurality of MMSCs is shown in Figure 2.

An MMSC interacts with a terminal via the Wireless Application Protocol (WAP) gateway, and an interface between them is referred to as an MM1 interface.

An MMSC interacts with a mail server by an MM3 interface, and the bearer protocol is the SMTP (Simple Mail Transfer Protocol).

An MMSC interacts with a Service Provider/Content Provider (SP/CP) by an MM7 interface, and the Hyper Text Transfer Protocol (HTTP) is usually selected as the bearer protocol, but other protocols may also be used.

The MMSCs interact with one another by an MM4 interface, and the bearer protocol is the SMTP.

When an originator MMS user agent sends a multimedia message to a user agent homing to a different MMSC, an originator MMSC is required to forward the multimedia message to a recipient MMSC via the MM4 interface, and then the recipient MMSC sends the multimedia message to the recipient user agent. Therefore, for the originator MMSC, route information of the recipient user agent first needs to be determined after receiving the multimedia message, i.e. it is necessary to determine to which MMSC the recipient user agent homes. If the recipient user agent homes to another MMSC, the originator MMSC needs to forward the multimedia message to the recipient MMSC via the MM4 interface.

Usually, an MMSC needs to determine a route of a recipient according to a Mobile Station International ISDN Number (MSISDN) of the recipient after receiving the submitted multimedia message.

In the prior art, a dedicated device such as a Telephone Number Mapping (ENUM) Domain Name Server (DNS) is usually employed for route query. Correlations between the different number segments and the MMSCs, i.e. the route information, are stored in the dedicated device. Corresponding information in the dedicated device needs to be timely updated after a terminal number used by a user is changed.

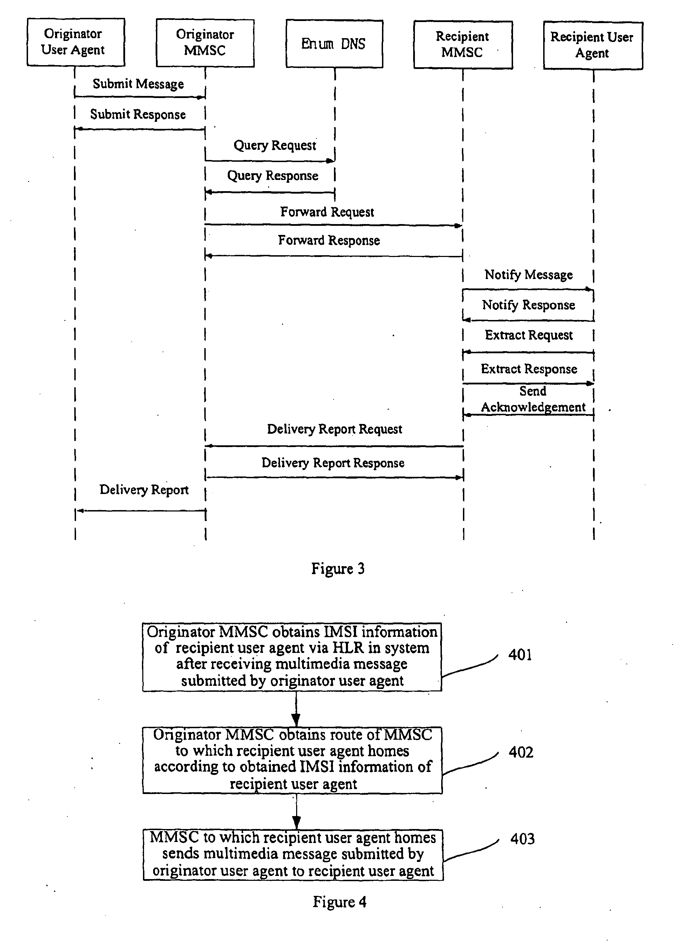

Figure 3 shows a flow for receiving and sending a multimedia message by a remote user.

After an originator MMSC receives a multimedia message submitted by a local user agent, an MSISDN of the recipient is extracted from the multimedia message. The MSISDN of the recipient is sent to a dedicated device such as an ENUM DNS for querying a route. The dedicated device returns related information to the originator MMSC after querying the route according to this number. The originator MMSC forwards the multimedia message submitted by the local user agent to an MMSC to which a recipient homes, i.e. a recipient MMSC, according to the route information received. The recipient MMSC transfers the multimedia messages to a corresponding user.

In practice, carriers may provide a Number Portability Service to users as needs sometimes, i.e. a user may change a carrier under maintaining an original number. In such a case, although an MSISDN of user is not changed, the user agent corresponding to the number is changed. At this time, even if a dedicated device is used, it is difficult to maintain the correlation between the MSISDN and the route exactly and timely. Therefore, the route information obtained by using the MSISDN is likely to be inexact. Moreover, the carrier's investment cost is increased due to need of a dedicated device for such a route query mode.

According to EP-A-1 622 412, with the object of making it possible to generate international multimedia message calls, an MMSC acquires an IMSI corresponding to a destination MSISDN by inquiring an HLR. Next, the MMSC acquires the domain name of the MMSE of the forwarding destination by referencing an IMSI routing table from the IMSI that has thus been acquired and forwards the multimedia message to this MMSE. The request for the IMSI is transmitted through a common channel signaling network.

EP-A-1 453 328 discloses a system and a method for routing of messages, including a signaling gateway (SGW) which, in response to a received subscriber identifier, performs an interrogation to subscriber registers (HLR1 to HLR4) through a signaling network to identify a network of a subscriber corresponding to a particular subscriber identifier, and a gateway (MMSGW) which relays messages between the message centers (MMSC1 to MMSC4) and which, to route the message to a correct message center, performs an interrogation to the signaling gateway (SGW) in response to receiving a message including a receiver's subscriber identifier to identify a network of a subscriber corresponding to the subscriber identifier.

### Summary of the Invention

The present invention provides a method and system for message routing in the Multimedia Message Service according to what is claimed in independent claims 1 and 6, so that route information of a user is accurately obtained by using an existing network device, thus the network structure is simplified, and the cost is lowered.

According to the invention, the Short Message Service Center as a signaling gateway is used to transfer a message for querying IMSI information of recipient user agent from a Home Location Register (HLR) by a Multimedia Message Service Center. An interface between an MMSC and a signaling gateway is preferably implemented by extending the existing SMPP3.4 protocol, and an interface between the signaling gateway and the HLR is implemented by using the Mobile Application Part (MAP) protocol. Therefore, in the invention, an existing network device can be utilized fully to obtain route information of a user, and no dedicated devices need to be added. As a result, not only the investment is lowered and the network structure is simplified, but also more exact routing information of the multimedia message is provided. Further, the Quality of Service of system can be improved.

### Brief Description of the Drawings

Figure 1 is a schematic diagram showing an architecture of a multimedia message system in the prior art;
Figure 2 is a structural schematic diagram showing a system operated by a plurality of MMSCs in the prior art;
Figure 3 is a flow for receiving and sending a multimedia message by a remote user in the prior art;
Figure 4 is a flow chart for implementation of a routing method according to an embodiment of the invention;
Figure 5 is a flow chart for querying user information according to an embodiment of the invention;
Figure 6 is a flow chart showing a implementation method for receiving and sending a multimedia message by a remote user according to an embodiment of the invention;
Figure 7 is a block diagram showing a system structure according to an embodiment of the invention; and
Figure 8 is a block diagram showing a system structure according to another embodiment of the invention.

### Detailed Description of the Embodiments

In the specification of the 3rd Generation Partnership Project (3GPP), although an MM5 interface between a Multimedia Message Service Center (MMSC) and a Home Location Register (HLR) is described, no specific implementing method is defined in the specification. The implementation of each MM5 interface is determined by the corresponding MMSC itself. Because the implementation of MMSC and the implementation of HLR are based on an IP network and a signaling network, it is very complicated to implement an interconnection between the MMSC and the HLR directly.

In the invention, a signaling gateway is utilized to relay a message for querying IMSI information of a recipient user agent by the MMSC from the HLR, so that the function of the MM5 interface is implemented. Because a corresponding information query interface already exists between the Short Message Service Center (SMSC) and the HLR in an existing network and its application is much mature, the information query interface is able to be utilized fully to make the SMSC accomplish the function of the signaling gateway for simplifying the network structure. An interface between the MMSC and the signaling gateway is implemented by extending the existing SMPP3.4 protocol, and an interface between the signaling gateway and the HLR is implemented by using the MAP protocol.

For making those skilled in the art better understand the solutions of the invention, the Short Message Peer-to-Peer (SMPP) protocol will first be described simply.

The SMPP protocol is an open message converting protocol, which defines a series of operating Protocol Data Units to accomplish information exchange between an SMSC and a non-Public Land Mobile Network (non-PLMN) short message entity such as an Extended Short Message Entity (ESME). The SMPP is based on communications of request and response Protocol Data Units between the SMSC and the ESME. Each of the operations in SMPP is based on one request Protocol Data Unit (PDU) and one corresponding response PDU, and such exchange is based on a network connection of the Transfer Control Protocol/Internet Protocol (TCP/IP) or X.25. According to the SMPP protocol, an ESME may be connected with the SMSC on the application layer by means of a network of TCP/IP or X.25, and send/ receive a short message to/from the SMSC. The ESME may also query, delete and replace the short message by the SMPP protocol.

According to an SMPP3.4 protocol, a structure definition of each PDU contains a PDU header and a PDU body (some PDUs do not contain), as shown in Table 1:

**Table 1**

| SMPP PDU | | | | |
|---|---|---|---|---|
| PDU HEADER | | | | PDU BODY |
| COMMAND LENGTH | COMMAND ID | COMMAND STATE | SERIAL NUMBER | PDU BODY |
| 4 BYTES | LENGTH = (COMMAND LENGTH - 4) BYTES | | | |

The Command Length field defines the length of a whole SMPP data packet. The Command ID field represents a type of SMPP PDU. The Command State field represents whether a request message is successful. The serial number field represents a serial number of a message, which is a corresponding flag between the request message and a response to the request message.

Commands, data_sm and data_sm_resp, are used to transfer data between the SMSC and the ESME, in which the data_sm is used for transferring a data request message, and the data_sm_resp is used for transferring a data response message. Some mandatory parameters and some optional parameters are contained in the message bodies of data_sm and data_sm_resp, respectively. Therefore, to implement the data transfer between the MMSC and the SMSC, information of a recipient user may be queried by extending optional fields in the message bodies of these two messages.

For example, in the message data_sm, an optional field get_MTRouting_Information is extended.

This field is defined in TLV (Type-Length-Value encoding format). The field is defined as shown in Table 2:

**Table 2**

| DOMAIN | LENGTH (BYTES) | TYPE | DESCRIPTION |
|---|---|---|---|
| PARAMETER NAME | 2 | INTEGRAL | get_MTRouting_Information |
| LENGTH | 2 | INTEGRAL | FIELD LENGTH, in 8BIT AS A UNIT |
| VALUE | 1 | INTEGRAL | "0" REPRESENTS THAT NO IMSI INFORMATION OF CALLED TERMINAL IS NEEDED; |
| | | | "1" MEANS THAT IMSI INFORMATION OF TERMINAL NEEDS TO BE QUERIED. |

In the message data_sm_resp, an optional field sub_IMSI is extended, which is defined in TLV. The field is defined as shown in Table 3:

**Table 3:**

| DOMAIN | LENGTH (BYTES) | TYPE | DESCRIPTION |
|---|---|---|---|
| PARAMETER NAME | 2 | INTEGRAL | sub_IMSI |
| LENGTH | 2 | INTEGRAL | FIELD LENGTH, IN 8BIT AS A UNIT |
| | 15 | | IMSI OF A |
| VALUE | | 8BIT STRING | RECIPIENT USER AGENT |

However, other optional fields in messages data_sm and data_sm_resp may also be used to represent a query on the recipient user information by the MMSC and the queried IMSI information of recipient user agent. Other messages may also be used to implement a query on the recipient user information. In one embodiment, this will be determined as required.

Because there is a one-to-one correspondence between the IMSI information and the user agent, after obtaining the IMSI of the recipient user agent, the MMSC is capable of determining an MMSC to which the recipient homes according to some simple route information (a correlation between the IMSI number segment and the MMSC) which is statically configured. Thus, the route of the multimedia message is able to be implemented.

For making those skilled in the art better understand the solutions of the invention, the invention is further illustrated in detail in conjunction with the drawings and embodiments.

Referring to Figure 4, Figure 4 shows a flow for implementation of a method according to an embodiment of the invention, including processes as follows:
401: an originator MMSC obtains IMSI information of a recipient user agent from an HLR in the system in response to receiving a message submitted by an originator user agent.

The originator MMSC obtains a Mobile Station ISDN Number (MSISDN) of the recipient user agent according to the message submitted by the originator user agent, and sends the MSISDN of the recipient user agent to the HLR for querying the IMSI information of the recipient user agent.

It is well known for those skilled in the art that basic information of users such as SIM card number, mobile number, and subscription information, and some dynamic information such as the current location, and whether the mobile station is turned off, are stored in the HLR. The HLR queries the user information saved in the HLR, finds IMSI information of the recipient user agent corresponding to the MSISDN, and sends the queried IMSI information to the originator MMSC. By this process, the originator MMSC is capable of implementing the query on the recipient user information.

As described in detail above, the data transfer between the MMSC and the HLR may be implemented via the signaling gateway. In implementation, a dedicated signaling gateway may be employed. Therefore, communication protocols, message types and formats need to be defined between the MMSC and the signaling gateway, and between the signaling gateway and the HLR. The query on the IMSI information of recipient user agent by the originator MMSC is able to be implemented by these messages.

To simplify the network structure, the SMSC in the existing network may also be used as the signaling gateway. The function for querying the IMSI information of recipient user agent by the originator MMSC is accomplished by using an information query interface existing between the SMSC and the HLR. An interface between the MMSC and the SMSC is implemented by extending the existing SMPP3.4 protocol, and an interface between the SMSC and the HLR is implemented by using the MAP protocol. Interfaces between network elements (including interface between the SMSC and the HLR) on a Global System for Mobile communication (GSM) network are specified in the MAP specification. These interfaces are widely used at present.

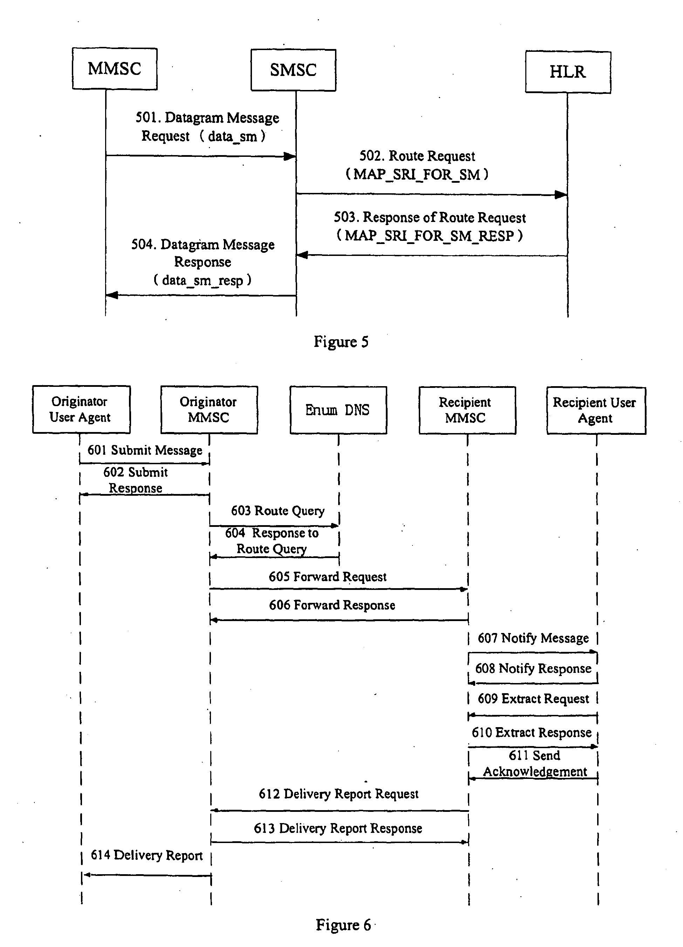

As shown in Figure 5, querying user information specifically includes processes as follows:
501: an MMSC sends a message data_sm of an extended SMPP3.4 protocol to an SMSC for querying the user information. The message data_sm carries an MSISDN of a user.
502: after receiving the query message, the SMSC converts the message into MAP_SRI_FOR_SM (a short message routing query message, and in the GSM specification, the SMSC queries a route of a short message recipient from the HLR by using this message), and sends the message to the HLR. The message carries the MSISDN of a recipient user agent.
503: if the query message is processed successfully, the HLR returns an IMSI of a user and a number of a visited MSC (the number identifies the MSC uniquely).
504: after receiving a response message to the MAP_SRI_FOR_SM, the SMSC converts the response message into a response message data_sm_resp to the data_sm, and returns the data_sm_resp to the MMSC.

The extensions of the message data_sm of the SMPP3.4 protocol and the response message data_sm_resp to the message data_sm are described in detailed above. Thus, this will not be described again here.
402: the originator MMSC obtains a route of the MMSC to which the recipient user agent homes according to the obtained IMSI information of the recipient user agent.

The correlation between the IMSI number segment and the MMSC may be configured in the originator MMSC in advance. Therefore, the originator MMSC queries the correlation stored therein according to the obtained IMSI information of recipient user agent, and obtains a route of the MMSC to which the recipient user agent homes.
403: The multimedia message submitted by the originator user agent is sent to the recipient user agent by the MMSC to which the recipient user agent homes.

The originator MMSC determines whether the MMSC to which the recipient user agent homes and the originator MMSC are the same one after obtaining the route of the MMSC to which the recipient user agent homes. If so, the originator MMSC sends the multimedia message submitted by the originator user agent to the recipient user agent directly. If the MMSC to which the recipient user agent homes and the originator MMSC are not the same one, the originator MMSC forwards the multimedia message submitted by the originator user agent to the MMSC to which the recipient user agent homes, and the recipient MMSC sends the multimedia message to the recipient user agent.

Figure 6 shows a flow for receiving and sending a multimedia message by a remote user according to a method of the invention.
601. An originator MMSC receives a multimedia message sent by an originator user agent.
602. The originator MMSC returns a submitting response message to the originator user agent.
603.The originator MMSC sends an MSISDN of the recipient user agent to an HLR for querying IMSI information of the recipient user agent.
604. The HLR sends the queried recipient user information (i.e. IMSI) to the originator MMSC.

The MMSC determines an MMSC to which the recipient user agent homes according to the obtained IMSI information and route information statically configured in the system (a correlation between an IMSI number segment and an MMSC). If the recipient user agent homes to the originator MMSC, the process directly goes to S607; otherwise the process goes to S605, in which the message is forwarded to the recipient MMSC via the MM4 interface.
605. The originator MMSC sends a forwarding request message to the recipient MMSC.
606. The recipient MMSC returns a forwarding response message to the originator MMSC in response to receiving the forwarding request message sent by the originator MMSC.
607. The recipient MMSC sends a multimedia message notice to the recipient user agent.
608. The recipient user agent sends a response message of multimedia message notice to the recipient MMSC.
609. The recipient MMSC waits for the recipient user agent to obtain the multimedia message (MM1_retrieve.REQ).
610. The recipient MMSC sends the multimedia message to the recipient user agent (MM1_retrieve.RES).
611. The recipient MMSC waits for a result notice from the recipient user agent (MM1_acknowledgement.REQ).
612. The recipient MMSC determines whether to send a delivery report message (MM1_delivery_report.REQ) to the originator user agent according to requirements given by the originator user agent in submitting the message. If the originator user agent requires sending a delivery report, the delivery report request message is sent to the originator MMSC.
613. The originator MMSC returns a delivery report response message to the recipient MMSC after receiving the delivery report request message.
614. The originator MMSC sends the delivery report to the originator user agent, and the process ends.

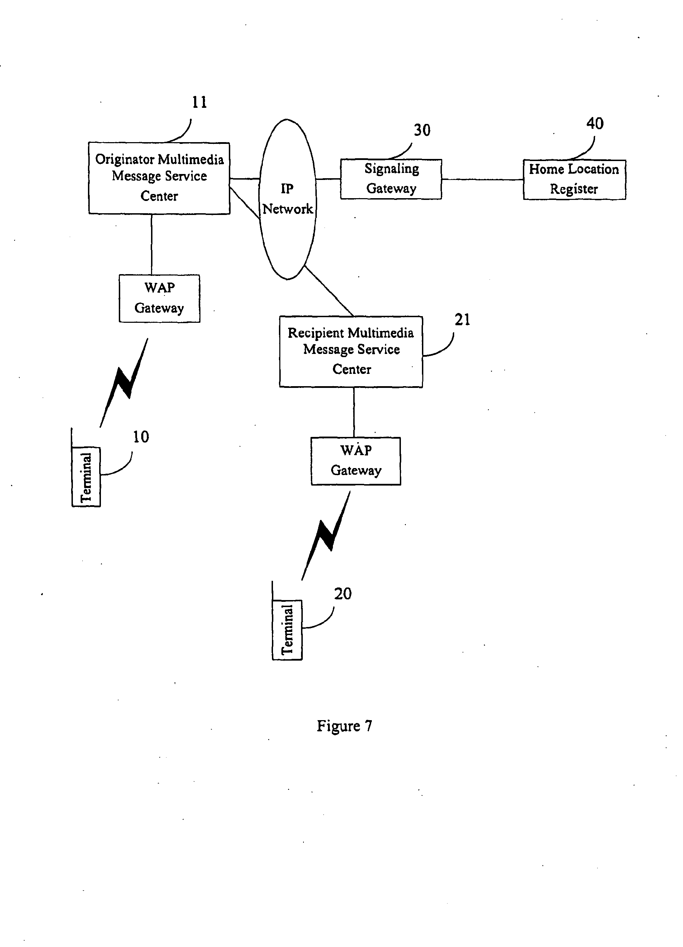

Referring to Figure 7, Figure 7 shows a block diagram of a system according to an embodiment of the invention.

In the system, a signaling gateway 30 is connected with an originator Multimedia Message Service Center (MMSC) 11 via an IP network, and connected with a Home Location Register (HLR) 40 via a signaling network. The originator MMSC 11 is connected with a recipient MMSC 21 via an IP network, an MM4 interface is employed for interaction, and the bearer protocol is the Simple Mail Transfer Protocol (SMTP). The interaction between the originator MMSC 11 and a user agent 10 and the interaction between the recipient MMSC 21 and a user agent 20 are implemented by a Wireless Application Protocol (WAP) gateway.

The HLR 40 is used for storing user information of a user agent. The signaling gateway 30 is used for implementing data transfer between the MMSC 11 and the HLR 40.

On routing multimedia message, the originator MMSC 11 queries and obtains the IMSI of a recipient user agent from the HLR 40 via the signaling gateway 30.

In order to obtain a route of the MMSC to which the recipient user agent homes, a correlation between an IMSI number segment and each MMSC is stored in the HLR 40. When the originator MMSC 11 queries the IMSI of the recipient user agent from the HLR 40, the HLR 40 not only returns the IMSI of the recipient user agent to the originator MMSC 11, but also returns the route of the MMSC to which the IMSI homes to the originator MMSC.

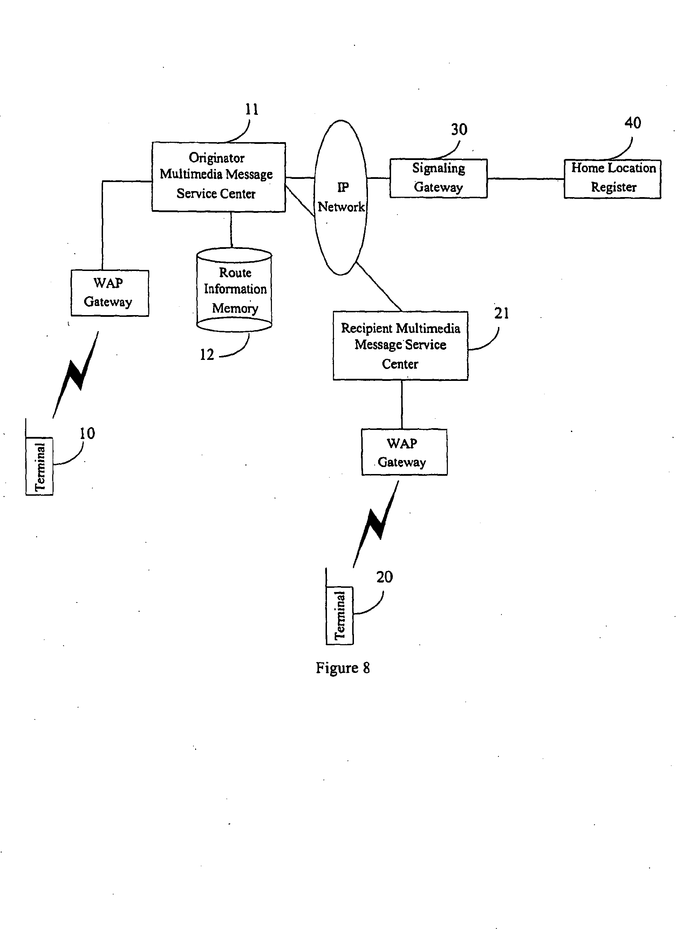

However, a route information memory 12 shown in Figure 8 is able to separately be configured in the system. The route information memory 12 is connected with the originator MMSC, and used for storing the correlation between the IMSI number segment and each MMSC. Because there is a one-to-one correspondence between the IMSI and the user agent, the originator MMSC 11 obtains the MMSC to which the recipient user agent homes according to the information stored in the route information memory 12 after querying and obtaining the IMSI information of the recipient user agent. However, to simplify the network structure, the route information memory 12 may be integrated in each originator MMSC in the network, and the correlation between the IMSI number segment and each MMSC is stored in the route information memory by configuring in advance.

In one embodiment, to fully use the existing network device and lower the investment, an existing information query interface between the SMSC and the HLR in the existing network is able to be utilized, and the SMSC is used as the signaling gateway. The interface between the SMSC and the MMSC is implemented by extending the SMPP3.4 protocol, and the interface between the SMSC and the HLR is implemented by the MAP protocol. The implementation mode is described in detail above. Thus, this will not be described again here.

Additional advantages and modifications will readily occur to those skilled in the art. Therefore, the invention in its broader aspects is not limited to the details and representative embodiments shown and described herein. Accordingly, various modifications and variations may be made without departing from the scope of the invention as defined by the appended claims.

## Claims

1. A method for message routing in Multimedia Message Service, comprising:
- obtaining, by an originator Multimedia Message Service Center, MMSC, a Mobile Station International ISDN Number, MSISDN, of a recipient user agent according to a message submitted by an originator user agent;
- sending, by the originator MMSC, the MSISDN of the recipient user agent to a Home Location Register, HLR, via a Short Message Service Center, SMSC, for querying International Mobile Subscriber Identifier, IMSI, information of the recipient user agent;
- receiving, by the originator MMSC, the queried IMSI information of the recipient user agent from the HLR via the SMSC;
- obtaining, by the originator MMSC, a route of an MMSC to which the recipient user agent homes according to the obtained IMSI information of the recipient user agent; and
- sending the message submitted by the originator user agent to the recipient user agent via the MMSC to which the recipient user agent homes.

2. The method according to claim 1, wherein the step of the originator MMSC sending the MSISDN of the recipient user agent to the HLR via the SMSC comprises:
- sending, by the originator MMSC, the MSISDN of the recipient user agent to the SMSC via an extended Short Message Peer-to-Peer Protocol, SMPP3.4 Protocol, for querying the IMSI information of the recipient user agent; and
- converting a query message into a route request message and sending the route request message to the HLR in response to receiving the query message, by the SMSC.

3. The method according to claim 2, wherein the extended SMPP3.4 Protocol sent by the originator MMSC is a message data_sm, and an optional field extended by the protocol indicates a request for querying IMSI information of the recipient user agent.

4. The method according to claim 1, wherein sending the queried IMSI information of the recipient user agent to the originator MMSC comprises:
- returning, by the HLR, the queried IMSI information of the recipient user agent to the SMSC by means of a route request response message; and
- returning, by the SMSC, the IMSI information of the recipient user agent to the originator MMSC by means of the extended SMPP3.4 Protocol.

5. The method according to claim 4, wherein the extended SMPP3.4 Protocol sent by the SMSC is a message data_sm_resp, and an optional field extended by the protocol indicates the IMSI information of the recipient user agent.

6. A system for message routing in the Multimedia Message Service, comprising an originator Multimedia Message Service Center, MMSC, a Home Location Register, HLR, and a Short Message Service Center, SMSC, wherein
the SMSC is connected with the originator MMSC via an IP network, and connected with the HLR via a signaling network; the HLR is adapted for storing user information of a recipient user agent; and the SMSC is adapted for realizing data transfer between the originator MMSC and the HLR; and
the originator MMSC is adapted for querying and obtaining an International Mobile Subscriber Identifier, IMSI, of a recipient user agent from the HLR via the SMSC in response to receiving a message including a Mobile Station International ISDN Number, MSISDN, of the recipient user agent submitted by an originator user agent.

7. The system according to claim 6, wherein the system further comprises:
a route information memory connected with the MMSC, capable of storing a correlation between an IMSI number segment and each MMSC.

8. The system according to claim 7, wherein the route information memory is integrated in the originator MMSC.

9. The system according to claim 6, wherein an interface between the SMSC and the MMSC is implemented via an extended Short Message Peer-to-Peer, SMPP3.4, Protocol.

10. The system according to claim 6, wherein an interface between the SMSC and the HLR is implemented via a Mobile Application Part, MAP, protocol.

## Patentansprüche

1. Verfahren zum Nachrichtenrouting im Multimedia Message Service mit den folgenden Schritten:
- ein Urheber-MMSC bzw. Multimedia Message Service Center erhält eine Mobile Station International ISDN Number MSISDN eines Empfänger-Benutzeragenten gemäß einer durch einen Uhrheber-Benutzeragenten übermittelten Nachricht;
- das Urheber-MMSC sendet die MSISDN des Empfänger-Benutzeragenten über ein Short Message Service Center SMSC zu einem Home Location Register HLR zum Abfragen von Informationen des International Mobile Subscriber Identifier IMSI des Empfänger-Benutzeragenten;
- das Urheber-MMSC empfängt die abgefragten IMSI-Informationen des Empfänger-Benutzeragenten über das SMSC von dem HLR;
- das Urheber-MMSC erhält eine Route eines MMSC, das der Empfänger-Benutzeragent als Heimat benutzt, gemäß den erhaltenen IMSI-Informationen des Empfänger-Benutzeragenten; und
- die durch den Urheber-Benutzeragenten übermittelte Nachricht wird über das MMSC, das der Empfänger-Benutzeragent als Heimat benutzt, zu dem Empfänger-Benutzeragenten gesendet.

2. Verfahren nach Anspruch 1, wobei der Schritt des Sendens der MSISDN des Empfänger-Benutzeragenten zu dem HLR über das SMSC durch das Urheber-MMSC Folgendes umfasst:
- das Urheber-MMSC sendet die MSISDN des Empfänger-Benutzeragenten über ein erweitertes Protokoll des Short Message Peer-to-Peer Protocol SMPP3.4 zu dem SMSC, um die IMSI-Informationen des Empfänger-Benutzeragenten abzufragen; und
- als Reaktion auf den Empfang der Abfragenachricht setzt das SMSC eine Abfragenachricht in eine Routenanforderungsnachricht um und sendet die Routenanforderungsnachricht zu dem HLR.

3. Verfahren nach Anspruch 2, wobei das durch das Urheber-MMSC gesendete erweiterte SMPP3.4-Protokoll eine Nachricht data_sm ist und ein durch das Protokoll erweitertes optionales Feld eine Anforderung zum Abfragen von IMSI-Informationen des Empfänger-Benutzeragenten angibt.

4. Verfahren nach Anspruch 1, wobei das Senden der abgefragten IMSI-Informationen des Empfänger-Benutzeragenten zu dem Urheber-MMSC Folgendes umfasst:
- das HLR gibt die abgefragten IMSI-Informationen des Empfänger-Benutzeragenten mittels einer Routenanforderungs-Antwortnachricht an das SMSC zurück; und
- das SMSC gibt die IMSI-Informationen des Empfänger-Benutzeragenten mittels des erweiterten SMPP3.4-Protokolls an das Urheber-MMSC zurück.

5. Verfahren nach Anspruch 4, wobei das durch das SMSC gesendete erweiterte SMPP3.4-Protokoll eine Nachricht data_sm_resp ist und ein durch das Protokoll erweitertes optionales Feld die IMSI-Informationen des Empfänger-Benutzeragenten angibt.

6. System zum Nachrichtenrouting im Multimedia Message Service, umfassend ein Urheber-MMSC bzw. Multimedia Message Service Center, ein Home Location Register HLR und ein Short Message Service Center SMSC, wobei das SMSC über ein IP-Netzwerk mit dem Urheber-MMSC verbunden ist und über ein Signalisierungsnetzwerk mit dem HLR verbunden ist; das HLR dafür ausgelegt ist, Benutzerinformationen eines Empfänger-Benutzeragenten zu speichern; und das SMSC dafür ausgelegt ist, Datentransfer zwischen dem Urheber-MMSC und dem HLR zu realisieren; und
das Urheber-MMSC dafür ausgelegt ist, als Reaktion auf den Empfang einer Nachricht, die eine Mobile Station International ISDN Number MSISDN des Empfänger-Benutzeragenten umfasst, die von einem Urheber-Benutzeragenten übermittelt wird, von dem HLR über das SMSC einen International Mobile Subscriber Identifier IMSI eines Empfänger-Benutzeragenten abzufragen und zu erhalten.

7. System nach Anspruch 6, wobei das System ferner Folgendes umfasst:
einen mit dem MMSC verbundenen Routeninformationsspeicher, der eine Korrelation zwischen einem IMSI-Nummernsegment und jedem MMSC speichern kann.

8. System nach Anspruch 7, wobei der Routeninformationsspeicher in das Urheber-MMSC integriert ist.

9. System nach Anspruch 6, wobei eine Schnittstelle zwischen dem SMSC und dem MMSC über ein erweitertes Protokoll des Typs Short Message Peer-to-Peer SMPP3.4 implementiert wird.

10. System nach Anspruch 6, wobei eine Schnittstelle zwischen dem SMSC und dem HLR über ein Protokoll des Mobile Application Part MAP implementiert wird.

## Revendications

1. Procédé permettant d'acheminer un message dans un service de messagerie multimédia, comprenant :
- la récupération, par un centre de service de messagerie multimédia, MMSC, expéditeur, du numéro de réseau RNIS international de station mobile, MSISDN, d'un agent utilisateur destinataire en fonction d'un message soumis par un agent utilisateur expéditeur,
- l'envoi, par le centre MMSC expéditeur, du numéro MSISDN de l'agent utilisateur destinataire vers un registre de localisation domestique, HLR, par l'intermédiaire d'un centre de service de messages courts, SMSC, afin de demander des informations sur l'identificateur international de l'abonné mobile, IMSI, de l'agent utilisateur destinataire,
- la réception, par le centre MMSC expéditeur, des informations demandées sur l'identificateur IMSI de l'agent utilisateur destinataire en provenance du registre HLR par l'intermédiaire du centre SMSC,
- la récupération, par le centre MMSC expéditeur, du routage d'un centre MMSC auquel est rattaché l'agent utilisateur destinataire en fonction des informations récupérées sur l'identificateur IMSI de l'agent utilisateur destinataire, et
- l'envoi du message soumis par l'agent utilisateur expéditeur vers l'agent utilisateur destinataire par l'intermédiaire du centre MMSC auquel est rattaché l'agent utilisateur destinataire.

2. Procédé selon la revendication 1, dans lequel l'étape pendant laquelle le centre MMSC expéditeur envoie le numéro MSISDN de l'agent utilisateur destinataire au registre HLR par l'intermédiaire du centre SMSC comprend :
- l'envoi, par le centre MMSC expéditeur, du numéro MSISDN de l'agent utilisateur destinataire au centre SMSC par l'intermédiaire d'un protocole étendu de messages courts d'égal à égal, SMPP3.4, afin de demander les informations sur l'identificateur IMSI de l'agent utilisateur destinataire, et
- la conversion, par le centre SMSC, d'un message de demande en un message de requête d'acheminement et l'envoi du message de requête d'acheminement au registre HLR en réponse à la réception du message de demande.

3. Procédé selon la revendication 2, dans lequel le protocole étendu SMPP3.4, envoyé par le centre MMSC expéditeur, est un message de type data_sm, et un champ en option étendu par le protocole indique une requête permettant de demander des informations sur l'identificateur IMSI de l'agent utilisateur destinataire.

4. Procédé selon la revendication 1, dans lequel l'envoi des informations demandées sur l'identificateur IMSI de l'agent utilisateur destinataire au centre MMSC expéditeur comprend :
- le renvoi, par le registre HLR, des informations demandées sur l'identificateur IMSI de l'agent utilisateur destinataire au centre SMSC au moyen d'un message de réponse de requête d'acheminement, et
- le renvoi, par le centre SMSC, des informations sur l'identificateur IMSI de l'agent utilisateur destinataire au centre MMSC expéditeur au moyen du protocole étendu SMPP3.4.

5. Procédé selon la revendication 4, dans lequel le protocole étendu SMPP3.4, envoyé par le centre SMSC est un message de type data_sm_resp, et un champ en option étendu par le protocole indique les informations sur l'identificateur IMSI de l'agent utilisateur destinataire.

6. Système permettant l'acheminement de messages dans le service de messagerie multimédia, comprenant un centre de service de messagerie multimédia expéditeur, MMSC, un registre de localisation domestique, HLR, et un centre de service de messages courts, SMSC, dans lequel
le centre SMSC est relié au centre MMSC expéditeur par l'intermédiaire d'un réseau au protocole IP, et il est relié au registre HLR par l'intermédiaire d'un réseau de signalisation, le registre HLR est conçu pour mémoriser des informations utilisateur relatives à un agent utilisateur destinataire, et le centre SMSC est conçu pour effectuer un transfert de données entre le centre MMSC expéditeur et le registre HLR, et
le centre MMSC expéditeur est conçu pour demander et pour récupérer un identificateur international d'abonné mobile, IMSI, appartenant à un agent utilisateur destinataire depuis le registre HLR par l'intermédiaire du centre SMSC en réponse à la réception d'un message, incluant le numéro de réseau RNIS international de station mobile, MSISDN, de l'agent utilisateur destinataire, soumis par un agent utilisateur expéditeur.

7. Système selon la revendication 6, dans lequel le système comprend en outre :
une mémoire d'informations sur les routages reliée au centre MMSC, pouvant mémoriser une corrélation établie entre un segment de numéro d'identificateur IMSI et chaque centre MMSC.

8. Système selon la revendication 7, dans lequel la mémoire des informations sur les routages est intégrée au centre MMSC expéditeur.

9. Système selon la revendication 6, dans lequel une interface est mise en oeuvre entre le centre SMSC et le centre MMSC par l'intermédiaire d'un protocole étendu d'égal à égal de messages courts, SMPP3.4.

10. Système selon la revendication 6, dans lequel une interface est mise en oeuvre entre le centre SMSC et le registre HLR par l'intermédiaire d'un protocole de sous-système d'application mobile, MAP.
